# EUROPEAN PATENT APPLICATION

(11) **EP 3 181 335 A1**
(43) Date of publication of application: **21.06.2017**
(21) Application number: 16201838.6
(22) Date of filing: 02.12.2016
(51) Int. Cl.: B29C 67/00

(54) **INFORMATION PROCESSING APPARATUS FOR ADDITIVE MANUFACTURING SYSTEM, INFORMATION PROCESSING METOD FOR ADDITIVE MANUFACTURING SYSTEM, AND CARRIER MEDIUM**

(30) Priority: 14.12.2015 JP 2015243409; 27.10.2016 JP 2016210974
(71) Applicant: Ricoh Company, Ltd., Tokyo 143-8555 (JP)
(72) Inventor: YUJI, Yasuaki, Tokyo, 143-8555 (JP); KOBAYASHI, Koji, Tokyo, 143-8555 (JP); YUKUMOTO, Reiji, Tokyo, 143-8555 (JP); MAEDA, Hiroshi, Tokyo, 143-8555 (JP); FEI, Yang, Tokyo, 143-8555 (JP)
(74) Representative: Schwabe - Sandmair - Marx

(57) **Abstract**

An information processing apparatus used for an additive manufacturing system includes a processor (10) configured to calculate a contact area of a contact face of a three dimensional (3D) model that contacts a base member of an additive manufacturing apparatus (2), calculate an adhesive force that is to occur to the contact face of the 3D model and the base member, rotate the 3D model by changing an angle of the 3D model with respect to a 3D modeling area (45), calculate a warping force that is to occur to the 3D model when the 3D model is to be formed into a 3D object under each orientation set for the 3D model by rotating the 3D model by changing the angle of the 3D model with respect to the 3D modeling area (45), and search for a target orientation of the 3D model where the warping force becomes smaller than the adhesive force.

## Description

### BACKGROUND

### Technical Field

This disclosure relates to an information processing apparatus for an additive manufacturing system, an information processing method for the additive manufacturing system, and a carrier medium.

### Background Art

Three-dimensional (3D) printers can employ various methods, such as a fused deposition modeling (FDM) method, a stereolithography (STL) method, a selective laser sintering method, an inkjet method, and a projection method. For example, the fused deposition modeling (FDM) method is used as one example of an additive manufacturing method, in which a resin filament such as acrylonitrile butadiene styrene (ABS) and polylactic acid (PLA) is melted, and the melted filament is dispensed on a base plate based on data of each of layers to be added one to another. When the melted filament is dispensed on the base plate, the filament is cooled and becomes solid, forming one layer. Then, the melted filament is further dispensed on the already-formed layer to form another layer. The sequence of dispensing and solidifying the filament is performed repeatedly to form the layers one atop another.

When the FDM method is employed, thermal contraction occurs when the melted filament is cooled and becomes solid. Therefore, by adding the layers one atop another, the thermal contraction force caused by the upper layer pulls the lower layer upward, which is known as "warping." If the warping force becomes greater than the adsorption force between the base plate and the lower layer, the lower layer warps upward as well, which is known as "deformation."

JP-2001-328175-A discloses a technology to suppress warping, in which an adhesive layer is formed on a base plate and an optically formable object is formed on the adhesive layer. The adhesive layer is formed on the base plate by applying transparent resin to the base plate and curing the transparent resin. Then, an object is formed on the transparent adhesive layer, with which the base plate and the optically formable object formed on the base plate can be bonded firmly, so that warping can be reduced.

As to the 3D printers employing the FDM method, an adhesive tape can be pasted onto the base plate to suppress warping, in which the adhesive force that occurs from the adhesive tape is used to cancel the warping force so that warping is suppressed.

The adhesive force obtained by the adhesive layer or the adhesive tape varies depending on a contact area of a three dimensional (3D) model that contacts the adhesive layer or the adhesive tape. If the contact area is small, the adhesive force cannot be obtained effectively, and the adhesive force becomes smaller than the warping force, so that warping occurs in the optically formable object.

As a result, an orientation of the 3D model must be adjusted to a desirable orientation so that the adhesive force obtained by the adhesive layer or the adhesive tape becomes greater than the warping force caused by the thermal contraction. However, since many factors affect a process of identifying an orientation that does not cause the warping, users of 3D printers cannot review these factors easily, and further are required to rotate a 3D model to the identified orientation manually, which is time-consuming process.

### SUMMARY

As one aspect of the present disclosure, an information processing apparatus used for an additive manufacturing system is devised. The information processing apparatus includes a processor configured to calculate a contact area of a contact face of a three dimensional (3D) model that contacts a base member of an additive manufacturing apparatus, calculate an adhesive force that is to occur to the contact face of the 3D model and the base member, rotate the 3D model by changing an angle of the 3D model with respect to a 3D modeling area, calculate a warping force that is to occur to the 3D model when the 3D model is to be formed into a 3D object under each orientation set for the 3D model by rotating the 3D model by changing the angle of the 3D model with respect to the 3D modeling area, and search for a target orientation of the 3D model where the warping force becomes smaller than the adhesive force.

As another aspect of the present disclosure, a method of processing information for an additive manufacturing system is devised. The method includes calculating a contact area of a contact face of a three dimensional (3D) model that contacts a base member of an additive manufacturing apparatus, calculating an adhesive force that is to occur to the contact face of the 3D model and the base member, rotating the 3D model by changing an angle of the 3D model with respect to a 3D modeling area, calculating a warping force that is to occur to the 3D model when the 3D model is to be formed into a 3D object under each orientation set for the 3D model by rotating the 3D model by changing the angle of the 3D model with respect to the 3D modeling area, and searching for a target orientation of the 3D model where the warping force becomes smaller than the adhesive force.

As another aspect of the present disclosure, a carrier medium carrying computer readable code that, when executed by a computer, causes the computer to execute a method of processing information for an additive manufacturing system is devised. The method includes calculating a contact area of a contact face of a three dimensional (3D) model that contacts a base member of an additive manufacturing apparatus, calculating an adhesive force that is to occur to the contact face of the 3D model and the base member, rotating the 3D model by changing an angle of the 3D model with respect to a 3D modeling area, calculating a warping force that is to occur to the 3D model when the 3D model is to be formed into a 3D object under each orientation set for the 3D model by rotating the 3D model by changing the angle of the 3D model with respect to the 3D modeling area, and searching for a target orientation of the 3D model where the warping force becomes smaller than the adhesive force.

As to the above described aspects of the present disclosure, when the 3D modeling is performed for the additive manufacturing such as the fused deposition modeling (FDM) method, the 3D model can be automatically rotated to an orientation that does not cause the warping without requiring an operation by a user to the 3D model and complex computing.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram of an additive manufacturing system of a first embodiment of the present disclosure;
FIG. 2 is a block diagram illustrating a hardware configuration of an information processing apparatus of the first embodiment;
FIG. 3 is a schematic perspective view of an additive manufacturing apparatus of the first embodiment;
FIG. 4 is a schematic image of a 3D modeling area on a PC software platform;
FIG. 5 is a block diagram of a controller of the additive manufacturing apparatus of the first embodiment;
FIG. 6 is a functional block diagram of the information processing apparatus of the first embodiment;
FIG. 7 is a functional block diagram of a 3D data converter of the first embodiment;
FIGS. 8A and 8B are a flowchart illustrating steps in a process of automatically rotating a 3D model into an orientation not causing warping.
FIG. 9 is a flowchart illustrating steps in predicting the warping;
FIG. 10 is a flowchart illustrating steps in a process of fitting a 3D model within a 3D modeling area;
FIG. 11 is a flowchart illustrating steps in a process of searching for a position where the 3D model does not extend beyond the 3D modeling area of the first embodiment;
FIG. 12 is a flowchart illustrating steps in another process for searching for a position where the 3D model does not extend beyond the 3D modeling area of the second embodiment;
FIGS. 13A and 13B are a first part of a flowchart illustrating steps in a process of a narrowing-down a position where the 3D model does not extend beyond the 3D modeling area;
FIG. 14 is a second part of the flowchart illustrating steps in a process of a narrowing-down a position where the 3D model does not extend beyond the 3D modeling area; and
FIGS. 15A and 15B are a flowchart illustrating steps in a narrowing-down searching process, which is performed multiple times, for the second part of the narrowing-down searching process of FIG. 14.

The accompanying drawings are intended to depict exemplary embodiments of the present disclosure and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present disclosure. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present disclosure.

In addition, it should be noted that the terminology used herein is for the purpose of describing particular embodiments only and is not intended to be limiting of the present disclosure. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views illustrated in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, a description is given one or more apparatuses or systems of one embodiment of the present disclosure.

### (First embodiment)

A description is given of an additive manufacturing system of a first embodiment with reference to drawings. The additive manufacturing system includes, for example, an additive manufacturing apparatus such as a three dimensional (3D) printer and an information processing apparatus such as a personal computer (PC). The PC analyzes 3D data such as computer aided design (CAD) data of a three dimensional (3D) object, converts the 3D data, and transmits the converted 3D data (e.g., 3D modeling data such as tool path data) to the 3D printer. When the 3D printer receives the converted 3D data (e.g., 3D modeling data such as tool path data), the 3D printer adds layers of filament used for forming the 3D object based on the 3D modeling data. The PC performs data processing for generating the 3D modeling data to be transmitted to the 3D printer.

Further, when determining a position of the 3D model used for 3D modeling in the FDM method, the 3D model is rotated through all angles for each of x-axis, y-axis, and z-axis directions to calculate warping force caused by thermal contraction at the current orientation, and adhesive force obtained from the base plate. Then, an orientation of the 3D model where the warping force becomes smaller than the adhesive force (= warping force < adhesive force) is searched, and the 3D model is automatically rotated to the orientation that the warping force becomes smaller than the adhesive force. The orientation of the 3D model where the warping force becomes smaller than the adhesive force can be also referred to as a target orientation of the 3D model.

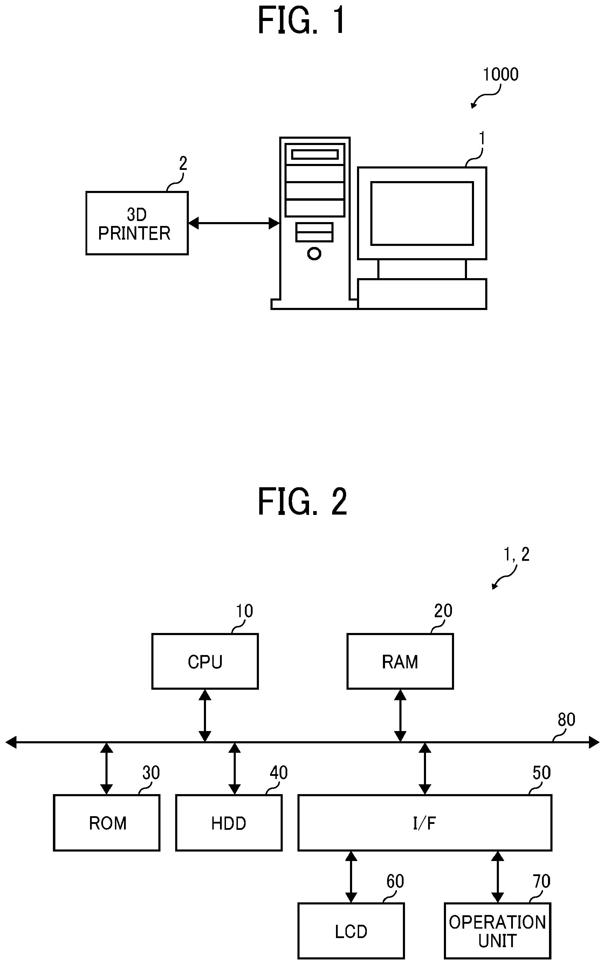

FIG. 1 is a schematic diagram of an additive manufacturing system1000 of a first embodiment, wherein the additive manufacturing system may be referred to as a three dimensional modeling system. The additive manufacturing system 1000 includes, for example, a personal computer (PC) 1, and a three-dimensional (3D) printer 2. The PC 1 is an example of the information processing apparatus, and the 3D printer 2 is an example of the additive manufacturing apparatus such as a three dimensional object forming apparatus used for manufacturing a three dimensional object (3D object). The PC 1 analyzes 3D data, converts the 3D data, and transmits the converted 3D data to the 3D printer 2, in which the PC 1 instructs the 3D printer 2 to form a three dimensional object(3D object). Under the control of the PC 1, the 3D printer 2 forms the 3D object.

A description is given of a hardware configuration of the PC 1 with reference to FIG. 2. FIG. 2 is a schematic diagram illustrating a hardware configuration of an information processing apparatus of an embodiment of the present disclosure.

As illustrated in FIG. 2, the PC 1 has a configuration similar to general information processing apparatuses such as servers and personal computers (PC). Specifically, the PC 1 includes, for example, a central processing unit (CPU) 10, a random access memory (RAM) 20, a read-only memory (ROM) 30, a hard disk drive (HDD) 40, and an interface (I/F) 50 that are connectable or couplable with each other by a bus 80. Further, a liquid crystal display (LCD) 60 and an operation unit 70 are connectable or couplable to the I/F 50.

The CPU 10 is a computing unit such as circuitry or a processor that controls the entire operation of the PC 1. The RAM 20 is a volatile memory, to and from which information can be read and written with a high speed, and the CPU 10 uses the RAM 20 as a working area when processing information or data. The ROM 30 is a non-volatile memory used as a read-only memory, in which various programs such as firmware can be stored. The HDD 40 is a non-volatile memory, to which information can be read and written. For example, the HDD 40 stores an operating system (OS), various control programs, and application programs.

The I/F 50 is connected or coupled to the bus 80, various units and networks, and controls the connection or coupling. The LCD 60 is a user interface that a user can check the status of the PC 1 visually. The operation unit 70 is a user interface such as a key board and a mouse that the user can input information to the PC 1. The operation unit 70 can be used as an input device in this description.

As to the above described hardware configuration of the PC 1, the CPU 10 performs computing by loading programs stored in the ROM 30, the HDD 40, and/or an external memory such as an optical disk on the RAM 20 to configure a software control unit or software controller. With a combination of the software control unit and the hardware, functional blocks required for the PC 1 can be devised.

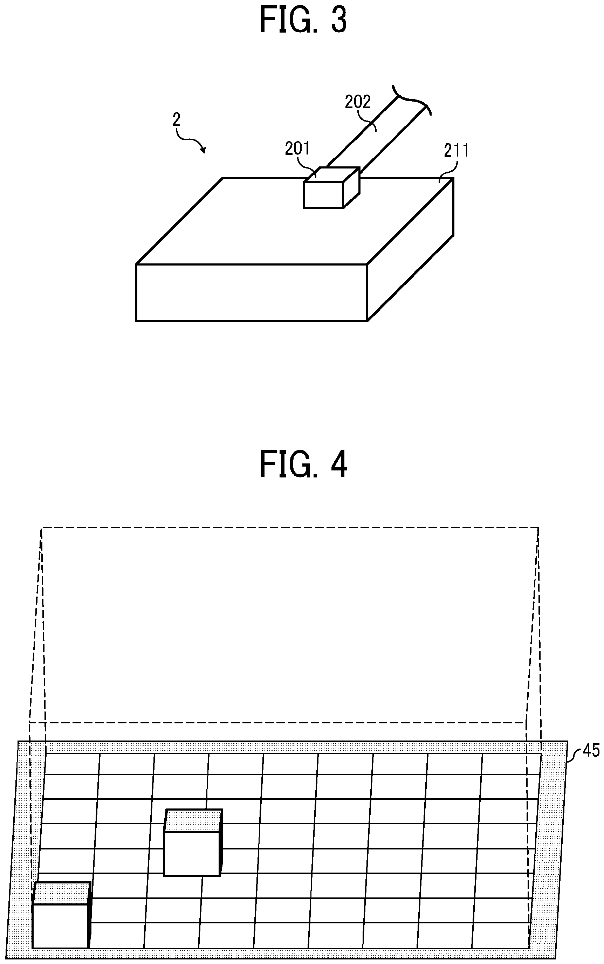

A description is given of a configuration of the 3D printer 2 with reference to FIG. 3. The 3D printer 2 includes, for example, a base plate 211, a dispenser head 201, and an arm 202. The base plate 211 is used as a base having a plate shape, on which a 3D object is formed by adding layers of filament. The dispenser head 201 dispenses the filament on or above the base plate 211. The arm 202 is used to support the dispenser head 201, and to move the dispenser head 201 in the space above the base plate 211. The base plate 201 is used as one example of a base member in this description.

The 3D printer 2 forms a 3D object by adding layers of filament based on 3D modeling data input from the PC1. Specifically, the PC1 generates so-called "slice data" of a cross-sectional shape of a 3D model of a 3D object by slicing 3D data of the 3D model. Then, the PC1 transmits the slice data to the 3D printer 2. Based on one slice data input from the PC1, the dispenser head 201 dispenses the filament for one layer, and then the dispenser head 201 dispenses the filament for another layers based on another slice data input from the PC1 to add layers of the filament, with which the 3D printer 2 forms the 3D object by adding the layers. More specifically, the dispenser head 201 dispenses the filament to positions corresponding to slice data, with which portions dispensed with the filament has a shape corresponding to the slice data. Therefore, the dispenser head 201 and the arm 202 can be collectively used as a filament dispensing unit that selectively dispenses the filament at positions determined by information of 3D object to be formed.

When the one filament layer is formed, another filament layer is further formed on the preceding filament layer. By repeating the process of forming the filament layers one by one, the plurality of filament layers are laminated on the base plate 211, and then the 3D object is formed on the base plate 211. The base plate 211 is used as a stage for dispensing the filament.

Further, the 3D printer 2 can also have information processing capability equivalent to the configuration of FIG. 2. The 3D printer 2 having the information processing capability can be controlled by using the PC 1. The 3D printer 2 having the information processing capability has a controller to control the movement of the arm 202 and the filament dispensing from the dispenser head 201.

FIG. 4 is a schematic image of a 3D modeling area on a PC software platform. As indicated in FIG. 4, a 3D modeling area 45 is typically expressed as a rectangular parallelepiped.

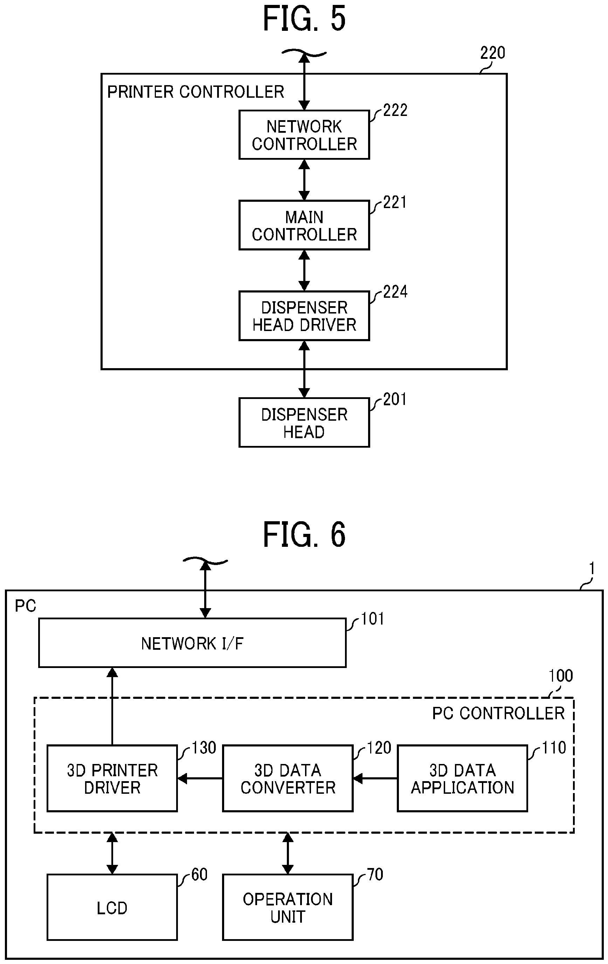

A description is given of a block diagram of a controller of the 3D printer 2 with reference to FIG. 5. As illustrated in FIG. 5, the 3D printer 2 includes, for example, the dispenser head 201, and a printer controller 220 that controls the dispenser head 201.

The printer controller 220 includes, for example, a main controller 221, a network controller 222, and a dispenser head driver 224. The main controller 221 controls the overall operation of the printer controller 220. The main controller 221 can be implemented when the CPU 10 executes computing based on an operating system (OS) and application programs. The network controller 222 is an interface used for communicating information between the 3D printer 2 and other apparatuses such as the PC 1. The network controller 222 employs, for example, Ethernet (registered trademark) and universal serial bus (USB) interfaces. The dispenser head driver 224 is driver software that controls a driving of the dispenser head 201. The dispenser head driver 224 controls the driving of the dispenser head 201 under the control of the main controller 221.

A description is given of a functional block diagram of the PC 1 with reference to FIG. 6. As illustrated in FIG. 6, the PC 1 includes, for example, the LCD 60, the operation unit 70, a PC controller 100, and a network interface (I/F) 101. The network I/F101 is an interface used for communicating information between the PC1 and other apparatuses such as the 3D printer 2 via a network. The network I/F101 employs, for example, Ethernet (registered trademark) and universal serial bus (USB) interface.

The PC controller 100 can be implemented by combining a software and a hardware, and the PC controller 100 controls the PC 1 entirely. As illustrated in FIG. 6, the PC controller 100 includes, for example, a 3D data application 110, a 3D data converter 120, and a 3D printer driver 130.

The 3D data application 110 is a software application such as a computer aided design (CAD) software that processes 3D data that defines a 3D shape of a 3D object. The 3D data converter 120 is used as 3D information processing unit that acquires the 3D data and converts the 3D data. Therefore, a program to implement the 3D data converter 120 is used as an information processing program.

The 3D data can be input to the 3D data converter 120 when the 3D data converter 120 acquires the 3D data input to the PC 1 via a network, or when the 3D data application 110 instructs the 3D data converter 120 to process the 3D data. Further, the 3D data converter 120 can acquire a file path data designated by the operation unit 70, in which a user may input the file path data.

The 3D data converter 120 analyzes the acquired 3D data, and performs data processing to convert the 3D data to 3D modeling data such as tool path data. The 3D data converter 120 generates the 3D modeling data that can reduce the gap between the filaments used for forming a 3D object when the 3D object defined by the input 3D data is formed on the base plate 211. Therefore, the PC1 having the 3D data converter 120 can be used as the information processing apparatus to be described later in detail.

The 3D printer driver 130 is a software module to operate the 3D printer 2 from the PC 1. The 3D printer driver 130 has a capability similar to typical 3D printer driver software. For example, the 3D printer driver 130 has a capability similar to a printer driver of a sheet printer. The 3D printer driver 130 generates data of cross-sectional shape of each layer of the 3D data of the 3D object as the slice data and transmits the slice data and control-use information to the 3D printer 2

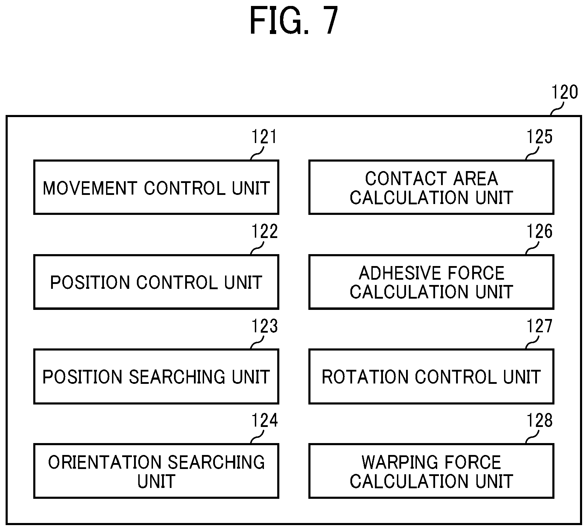

A description is given of capabilities of the 3D data converter 120 with reference to FIG. 7. FIG. 7 is a functional block diagram of the 3D data converter 120. As indicated in FIG. 7, the 3D data converter 120 includes, for example, a movement control unit 121, a position control unit 122, a position searching unit 123, an orientation searching unit 124, a contact area calculation unit 125, an adhesive force calculation unit 126, a rotation control unit 127, and a warping force calculation unit 128.

The movement control unit 121 controls a movement operation to move the 3D model to any position. Further, the movement control unit 121 controls a movement operation to move the 3D model to a position where the 3D model can fit within the 3D modeling area 45. Specifically, when the rotated 3D model extends beyond or exceeds from the 3D modeling area 45 while searching for an orientation of the 3D model that does not cause the warping, the movement control unit 121 moves the 3D model to a position where the 3D model can fit within the 3D modeling area 45 while maintaining the current orientation of the 3D model.

The position control unit 122 is used to detect whether the 3D model extends beyond the 3D modeling area 45. The position searching unit 123 is used to search for a position where the 3D model does not extend beyond the 3D modeling area 45. Based on a detection result of the position control unit 122 and a search result of the position searching unit 123, the movement control unit 121 moves the 3D model to any position.

The position control unit 122 controls an operation of correcting a position and orientation of the 3D model so that the 3D model does not extend beyond the 3D modeling area 45. Specifically, the position control unit 122 detects whether the 3D model extends beyond the 3D modeling area 45 based on polygon data of the 3D model at the current orientation, and maximum modeling size information of the 3D printer 2 corresponding to a size of the 3D modeling area 45.

The position searching unit 123 searches for a position of the 3D model that does not extend beyond the 3D modeling area 45 based on a reference position such as designated coordinate data used for searching for a position of the 3D model that does not extend beyond the 3D modeling area 45. Specifically, the position searching unit 123 executes an algorithm to instruct the position control unit 122 to move the 3D model, and the position searching unit 123 detects any excess at the position where the 3D model is moved thereto. Then, the position searching unit 123 searches for a position of the 3D model that does not extend beyond the 3D modeling area 45.

The maximum modeling size information of the 3D printer 2 can be prepared using any appropriate method. For example, the maximum modeling size information of the 3D printer 2 can be pre-set in the software 4 as a fixed parameter or the maximum modeling size information of the 3D printer 2 can be input manually

The orientation searching unit 124 searches for an orientation of the 3D model where the warping force that is to occur to the 3D model becomes smaller than the adhesive force that is to occur to the contact face of the 3D model.

The contact area calculation unit 125 calculates a contact area of a contact face of the 3D model that contacts the base plate 211 based on polygon data configuring the 3D model when the 3D model is set at the current orientation. Hereinafter, the contact area of the contact face of the 3D model that contacts the base plate 211 may be simply referred to as the contact area of the 3D model.

The adhesive force calculation unit 126 calculates the adhesive force that is to occur at the contact face of the 3D model. The adhesive force calculation unit 126 calculates the adhesive force based on the contact area of the 3D model, physical property of an adhesive tape set on the base plate 211 of the 3D printer 2, and temperature inside the 3D printer 2.

Since the adhesive force of the adhesive tape changes depending on temperature, information on the temperature inside the 3D printer 2 is required for calculating the adhesive force. The physical property information of the adhesive tape can be prepared using any appropriate method. For example, the physical property information of the adhesive tape can be pre-set in the software 4 as a fixed parameter, or the physical property information of the adhesive tape can be input manually when the process is to be performed.

The temperature information in the 3D printer 2 includes, for example, temperature information such as temperature of the base plate 211, temperature inside the 3D printer 2, and temperature of a device that melts the filament (i.e., temperature of dispensed filament). Since values of these three temperature are respectively maintained at constant values when the 3D printer 2 is forming a 3D object, the values of these three temperatures are respectively required to be prepared as parameters using any appropriate method. For example, the values of these three temperatures can be pre-set in the software 4 as a fixed parameter or the values of these three temperatures can be input manually.

The rotation control unit 127 rotates the polygon data configuring the 3D model with any angles to change the orientation of the 3D model.

The warping force calculation unit 128 calculates the warping force that is to occur to the 3D model when the 3D model is to be formed into a 3D object by setting one orientation. The warping force occurs due to thermal contraction of the filament. The warping force caused by thermal contraction varies depending on parameters such as physical property information of the filament such as contraction rate of the filament, information of temperature inside the 3D printer 2 when the 3D model is to be formed into a 3D object, and a shape of the 3D model. Therefore, the warping force calculation unit 128 calculates the warping force based on these parameters.

The physical property information of the filament can be prepared using any appropriate method. For example, the physical property information of the filament can be pre-set in the software 4 as a fixed parameter or the physical property information of the filament can be input manually.

The maximum object size that the 3D printer 2 can form an actual 3D object is limited by the dimensions of the 3D printer 2. Therefore, a three dimensional area such as the 3D modeling area 45 (see FIG. 4), which is a simulation area of the maximum modeling size that the 3D printer 2 can use, is set, and the 3D data converter 120 generates target slice data by setting the 3D model within the 3D modeling area 45. By employing this configuration, the 3D data converter 120 can generate the 3D model that is set within the 3D modeling area 45, and generate the slice data matched to the actual 3D object, with which the actual 3D object can be formed correctly.

As described above, the 3D data converter 120 calculates the contact area of the contact face of the 3D model and the warping force, rotates the 3D model, detects whether the 3D model extends beyond the 3D modeling area 45, and moves the 3D model so that the 3D can be fit within the 3D modeling area 45. When the 3D data converter 120 performs these processes, the results of these processes are applied to the 3D model data to be transmitted to the 3D printer driver 130.

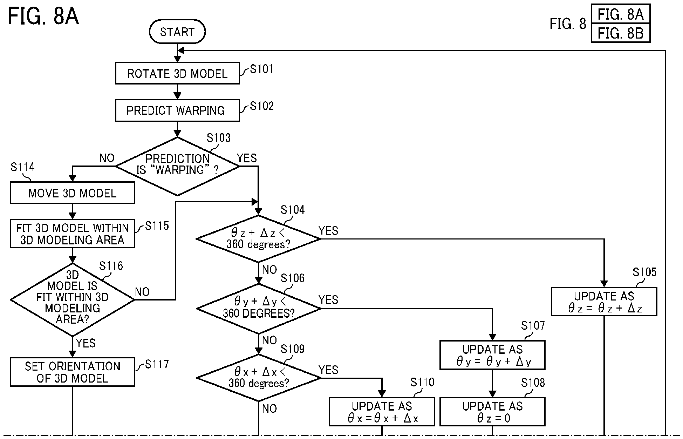

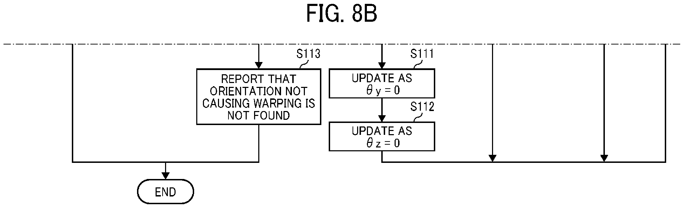

FIG. 8 is a flowchart illustrating steps in a process of automatically rotating the 3D model in an orientation not causing the warping. In the process indicated in FIG. 8, the automatic rotation of the 3D model into the orientation not causing the warping is started under the following conditions, including, for example, (1) the rotation angle (θx, θy, θz) of the 3D model about each of x-axis, y-axis, and z-axis is set with an initial condition such as zero degree, and (2) a parameter such as an increment of the rotation angle (Δx, Δy, Δz) is set for each of x-axis, y-axis, and z-axis because an orientation that does not cause the warping is searched by gradually increasing the rotation angle for each of x-axis, y-axis, and z-axis. The increment of the rotation angle (Δx, Δy, Δz) can be designated using any appropriate method. For example, the increment of the rotation angle (Δx, Δy, Δz) can be designated in the software 4 as a fixed parameter, or the increment of the rotation angle (Δx, Δy, Δz) can be input manually.

Then, the 3D model is rotated with an angle corresponding to the rotation angle (θx, θy, θz) (step S101), and the warping prediction process is performed for the rotated 3D model (step S102). If the prediction result of the warping prediction process (step S102) is "warping" (step S103: YES), the rotation angle is changed to search for another orientation, and the 3D model is rotated by using the changed rotation angle, and then the warping prediction process (step S102) is performed again.

Specifically, the 3D model is rotated through 360 degrees for each of x-axis, y-axis, and z-axis to find an orientation that does not cause the warping. For example, each of the axes is fixed in the order of x → y → z, and the 3D model is rotated by incrementing the angle θz for z-axis by adding the increment of the rotation angle Δz (step S104: YES → S105 →S101).

When the sequence from steps S101, S102, S103, S104 to S105 is repeated and the 3D model is rotated through 360 degrees about the z-axis (step S104: NO), the 3D model is rotated by incrementing the angle θy and setting zero for the angle θz (step S106: YES → S107 → S108 → S101). Then, when the sequence from steps S101, S102, S103, S104, S105, S106, S107 to S108 is repeated and the 3D model is rotated through 360 degrees about the y-axis (step S106: NO), the 3D model is rotated by incrementing the angle θx and setting zero for the angle θy and the angle θz (S109: YES → S110 → S111 → S112 → S101). By performing the sequence from steps S101, S102, S103, S104, S105, S106, S109, S110, S111 to S112, an orientation of the 3D model that does not cause the warping is searched for the 3D model in the space defined by the x, y, and z axes.

If an orientation that does not cause the warping is not found after the 3D model is rotated through 360 degrees for the x-axis, y-axis, and z-axis, a feedback message indicating that an orientation not causing the warping is not found is reported out (step S113), wherein step S113 can be omitted. By performing steps S101 to S113, the automatic rotation of the 3D model is completed.

By contrast, if the prediction result of the warping prediction process (step S102) is "not warping" (step S103: NO), the 3D model is moved to contact the 3D model to the base plate 211 (step S114), in which the minimum value of z-axis is set zero. Further, when an orientation of the 3D model is automatically corrected to fit the 3D model within the 3D modeling area 45, the process of fitting the 3D model within the 3D modeling area 45 is performed (step S115), and then it is checked whether the 3D model fits within the 3D modeling area 45 (step S116).

If the 3D model fits within the 3D modeling area 45 (step S116: YES), it is determined that the 3D model is to be formed into a 3D object at the current orientation and position (step S117), with which the automatic rotation of the 3D model to set the orientation that does not cause the warping is completed.

If the orientation and position where the 3D model fits within the 3D modeling area 45 is not found (step S116: NO), it is determined that the 3D model cannot be formed into the 3D object at the current orientation and position, the sequence shifts to step S104 to search for another orientation, and then the above described sequence used for a case in which the prediction result is "warping" is performed. As described above, the orientation of the 3D model that does not cause the warping can be searched with enhanced precision.

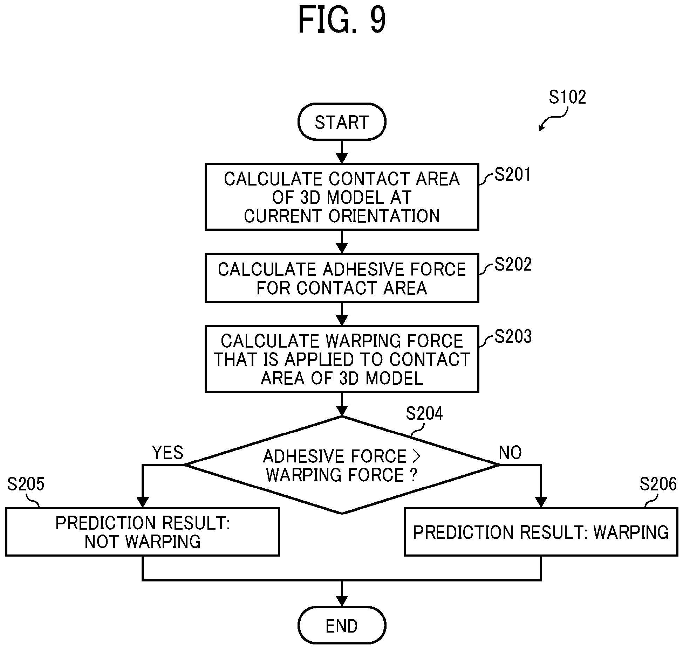

FIG. 9 is a flowchart illustrating steps in predicting the warping at step S102 of FIG. 8.

As to the process of predicting the warping, an area size of the lowest layer of the 3D model, parallel to the x-y plane, is calculated as the contact area based on a 3D model data 51 set with the current orientation (step S201). Then, the adhesive force obtained for the contact area of the contact face of the 3D model is calculated based on the contact area 52, property of the adhesive tape, and the internal temperature of the 3D printer 2 (step S202).

Then, the "warping force" that is to occur to the contact face of the 3D model when the 3D model is formed as a 3D object under the current orientation is calculated (step S203). When one filament layer is formed on the base plate 211, and other filament layer is formed on the one filament layer already formed on the base plate 211, the warping force occurs by thermal contraction of the other filament layer. Therefore, information of the shape of the 3D model such as 3D model data, information of thermal contraction property of the filament, and information of the internal temperature of the 3D printer 2 that affects thermal contraction are required.

Then, the adhesive force calculated at step S202 and the warping force calculated at step S203 are compared (step S204). If the adhesive force is greater than the warping force (step S204: YES), it can be predicted that the warping will not occur, and a result of "not warping" is transmitted to the processing unit such as the CPU 10 (step S205), so that warping prediction process is completed. By contrast, if the adhesive force is smaller than the warping force (step S204: NO), it can be predicted that the warping will occur, and a result of "warping" is transmitted to the processing unit such as the CPU 10 (step S206), so that warping prediction process is completed.

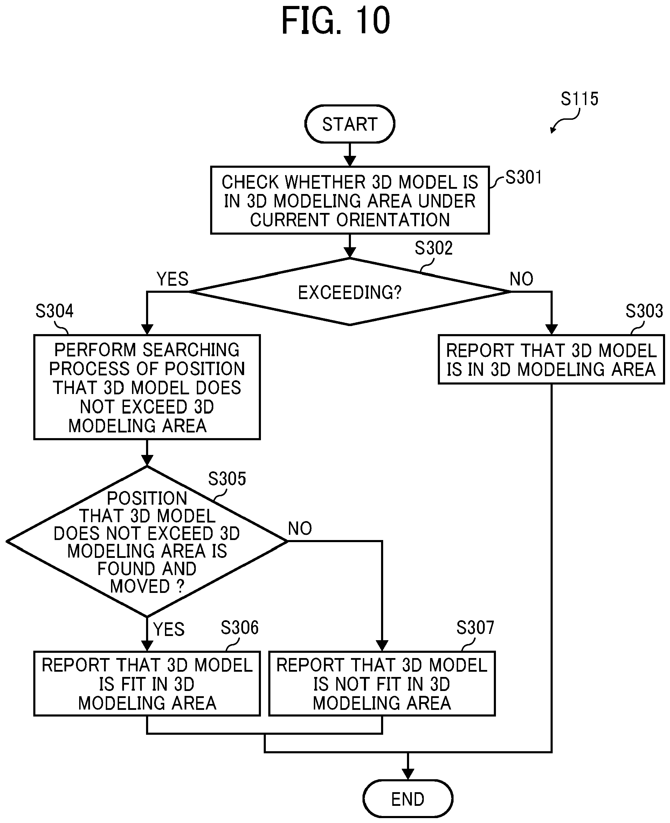

FIG. 10 is a flowchart illustrating steps in a process of fitting the 3D model within the 3D modeling area 45 at step S115 of FIG. 8.

As to the process of fitting the 3D model within the 3D modeling area 45, the 3D modeling area 45 that simulates the maximum modeling size information of the 3D printer 2 is generated based on the maximum modeling size information of the 3D printer 2. Specifically, the maximum and minimum coordinates data of polygon data configuring the 3D model data set with the current orientation are acquired for the x-axis, y-axis, and z-axis (step S301), and then it is determined whether these coordinates fit within the 3D modeling area 45 (step S302).

If it is determined that these coordinates fit within the 3D modeling area 45 (step S302: NO), a result of "not exceeding" is detected, and then a result that "3D model is fit in the 3D modeling area 45" is reported to the processing unit such as the CPU 10 (step S303), with which the fitting process is completed.

If these coordinates are not within the 3D modeling area 45, a result of "exceeding" is detected (step S302: YES). In this case, the searching process is performed to find a position where the 3D model does not extend beyond the 3D modeling area 45 so that the 3D model can fit within the 3D modeling area 45 (step S304). If the position where the 3D model does not extend beyond the 3D modeling area 45 is found, and the 3D model is moved to the concerned position (step S304: YES), a result of "coordinates are within the 3D modeling area 45" is reported to the processing unit such as the CPU 10 (step S306), with which the fitting process is completed. By contrast, if the position where the 3D model does not extend beyond the 3D modeling area 45 is not found (step S305: NO), a result of "coordinates are not within the 3D modeling area 45" is reported to the processing unit such as the CPU 10 (step S307), with which the fitting process is completed.

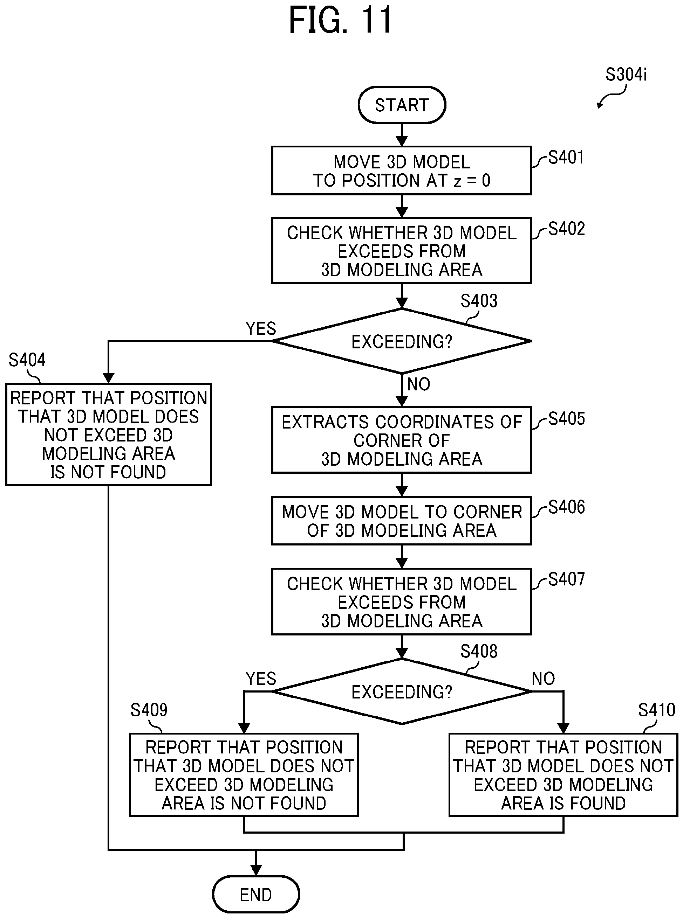

FIG. 11 is a flowchart illustrating steps in a process of searching for a position where the 3D model does not extend beyond the 3D modeling area 45 performed at step S304 of FIG. 10.

As to the searching process, the 3D model is moved to contact the 3D model on the base plate 211, in which z = 0 is set (step S401). Then, it is checked whether the 3D model extends beyond the 3D modeling area 45 in the z-axis direction (steps S402, S403), in which coordinates of polygon data of the 3D model and z-axis coordinates of the 3D modeling area 45 are compared similar to the above described exceeding detection. FIG. 11 illustrates a case in which a process of searching for a position where the 3D model does not extend beyond the 3D modeling area 45 is performed in the z-axis direction. The process illustrated can be also performed in other axis direction.

If it is checked that the 3D model extends beyond the 3D modeling area 45 in the z-axis direction (step S403: YES), even if the 3D model is moved to any position, a position where the 3D model does not extend beyond the 3D modeling area 45 does not exist. Therefore, a result of "a position where the 3D model does not exceed does not exist" is reported to the processing unit such as the CPU 10 (step S404), with which the searching process is completed.

By contrast, if it is checked that the 3D model does not extend beyond the 3D modeling area 45 in the z-axis direction (step S403: NO), the coordinates of the corner of the 3D modeling area 45 are extracted based on the maximum modeling size information (step S405). The coordinates of the corner means, for example, the minimum value in the x-axis and the minimum value in the y-axis. Since the 3D modeling area 45 may have four corners (e.g., one corner having the maximum value in the x-axis and the maximum value in the y-axis), any one of the four corners can be used to extract the coordinates of the corner of the 3D modeling area 45.

Then, the 3D model is moved to contact the 3D model to the extracted corner (step S406). Then, it is checked whether the 3D model extends beyond the 3D modeling area 45 when set at the concerned position corresponding to the extracted corner (steps S407 and S408). If the 3D model extends beyond the 3D modeling area 45 (step S408: YES), the 3D model set with the current orientation is not fit within the 3D modeling area 45, a result of "a position where the 3D model does not extend beyond the 3D modeling area 45 does not exist" is reported to the processing unit (step S409), with which the searching process is completed. By contrast, if the 3D model does not extend beyond the 3D modeling area 45 (step S408: NO), it means that the 3D model can be formed into a 3D object at the current position with the current orientation. Therefore, a result of "a position where the 3D model does not extend beyond the 3D modeling area 45 is found and the 3D model is moved" is reported to the processing unit such as the CPU 10 (step S410), with which the searching process is completed. As described above, the corner of the 3D modeling area 45 can be used as a reference when automatically searching for a position of the 3D model that does not extend beyond the 3D modeling area 45.

### (Second embodiment)

A description is given of another searching process as a second embodiment, in which a position designated by a user is used as a reference position to search for a position where the 3D model does not extend beyond the 3D modeling area 45, in which the reference position is used as a start position of the searching process. Specifically, a position where the 3D model does not extend beyond the 3D modeling area 45 is searched near the reference position designated by a user. The above-described FIGs. 1 to 10 in the first embodiment are also applied to the second embodiment, and thereby the descriptions of FIGs. 1 to 10 are omitted in the following description. As to the second embodiment, the 3D model can be set with an orientation that does not cause the warping by using coordinates of the reference position on input by the user. The reference position is used as a pre-set value.

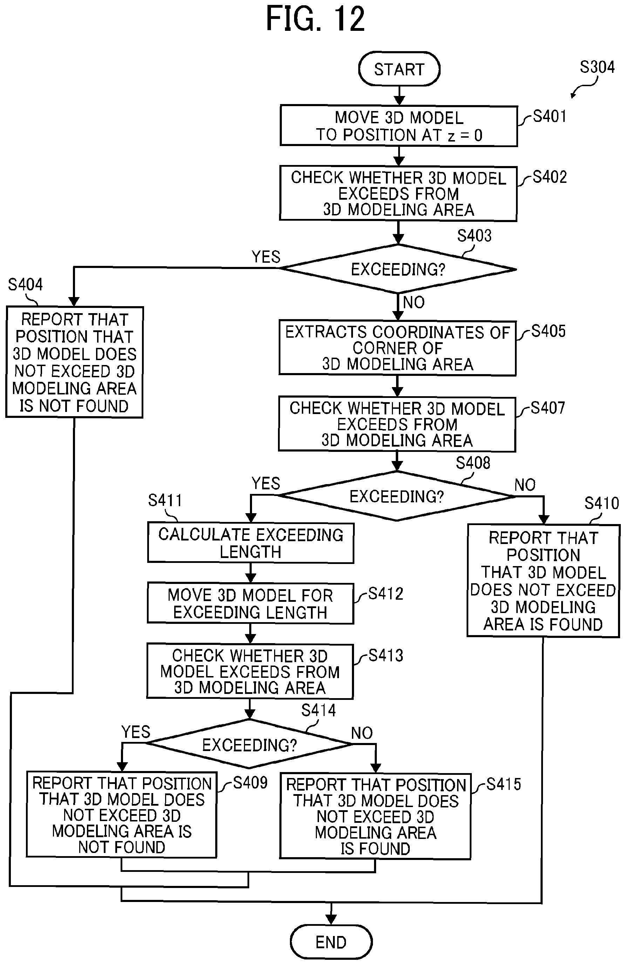

FIG. 12 is a flowchart illustrating steps in another process for searching for a position where the 3D model does not extend beyond the 3D modeling area 45 of the second embodiment performed at step S304 of FIG. 10. As to the searching process of the second embodiment, a position where the 3D model does not extend beyond the 3D modeling area 45 is searched by designated a position by a user, and the designated position is used as an initial reference position. Therefore, the 3D model is set at the reference position before performing the searching process in the second embodiment, which means the 3D model is set at the reference position before starting the searching process. The searching process of FIG. 12 has some processes that are same as the processes of FIG. 11. Therefore, only the processes different from the processes of FIG. 11 are described. The reference position is used as a pre-set value.

As to the searching process of FIG. 11, if it is determined that the 3D model extends beyond the 3D model area 45 at step S408, a result of "the position where the 3D model does not exceed is not found" is reported to the processing unit such as the CPU 10 at step S409, with which the searching process is completed. By contrast, as to the searching process of FIG. 12, steps S411 to S414 are performed before performing step S409. Specifically, if it is determined that the 3D model set at the reference position extends beyond the 3D model area 45 at step S408, a length of the 3D model exceeding from the 3D model area 45 is calculated (step S411). Specifically, if the 3D model set at the reference position extends beyond or exceeds from the 3D model area 45, the exceeding length of the 3D model with respect to the 3D modeling area 45 is calculated in minus and plus directions of the x-axis, and in minus and plus directions of the y-axis. The exceeding length of the 3D model can be calculated from the maximum coordinates and the minimum coordinates in the x-axis and the y-axis of the 3D modeling area 45, and the maximum coordinates and the minimum coordinates in the x-axis and the y-axis of the 3D model set with the current position and orientation.

Then, the 3D model set at the reference position is moved for the calculated exceeding length, with which the 3D model is set at a new position shifted from the reference position (step S412), and then it is determined whether the 3D model extends beyond the 3D model area 45 again (steps S413 and S414). If the 3D model set at the new position does not extend beyond the 3D model area 45 (step S414: NO), the 3D model can be formed into a 3D object at the current orientation and position, and a result of "a position where the 3D model does not exceed is found and the 3D model is moved" is reported to the processing unit such as the CPU 10 (step S415), with which the searching process is completed.

By contrast, if the 3D model set at the new position extends beyond the 3D model area 45 (step S414: YES), a result of "a position where the 3D model does not exceed is not found" is reported to the processing unit such as the CPU 10 (step S409), with which the searching process is completed.

### (Third embodiment)

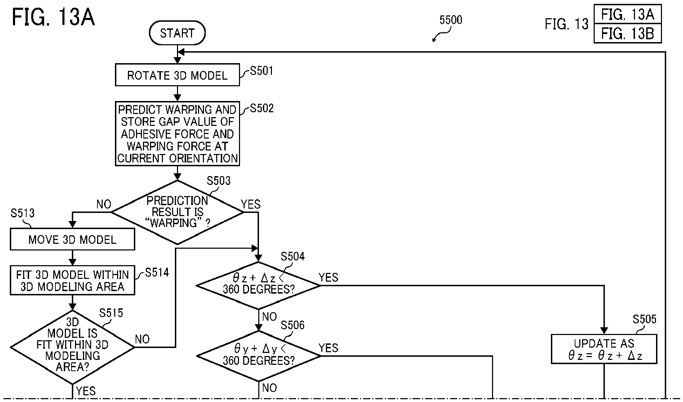

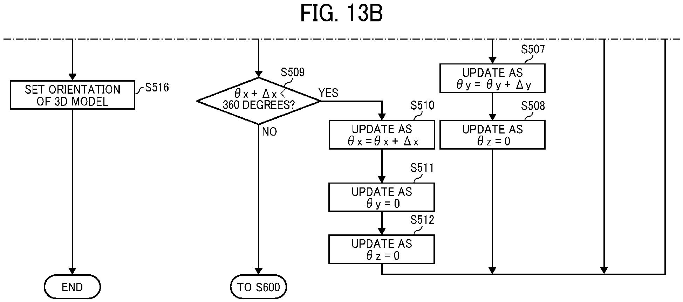

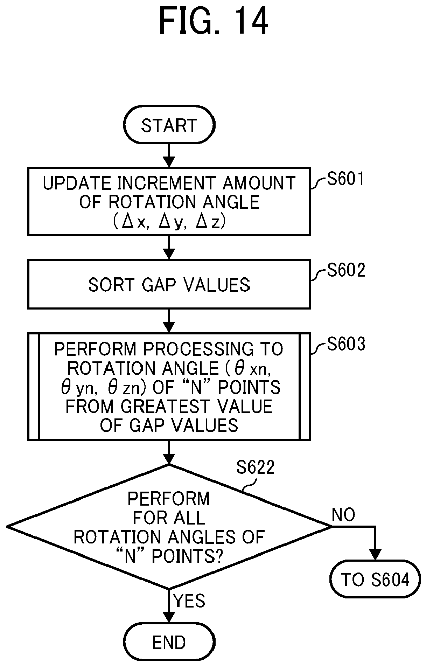

A description is given of another searching process as a third embodiment, in which an orientation that the 3D model does not exceed is searched by rotating the 3D model by setting a preliminary angle at first to estimate a preliminary orientation that may not cause the warping, and then a precision enhanced orientation that does not cause the warping is further searched near the preliminary orientation set with a preliminary angle. The searching process of the third embodiment is performed instead of the searching process of the first embodiment of FIG. 8 such as "automatically rotating the 3D model in orientation not causing the warping." FIGs. 13 and 14 are flowcharts illustrating steps in another process for searching for a position where the 3D model does not extend beyond the 3D modeling area 45 of the third embodiment. FIG. 13 is a first part of a flowchart illustrating steps in a process of a narrowing-down a position where the 3D model does not extend beyond the 3D modeling area 45. FIG. 14 is a second part of the flowchart illustrating steps in the process of a narrowing-down a position where the 3D model does not extend beyond the 3D modeling area 45.

As to the third embodiment, the preliminary orientation that the 3D model does not extend beyond the 3D modeling area 45is estimated at first, and then the precision enhanced orientation that does not cause the warping is further searched near the preliminary orientation, in which the searching orientation is narrowed down from the preliminary orientation to the precision enhanced orientation. The above-described FIGs. 1 to 10 in the first embodiment are also applied to the third embodiment, and thereby the descriptions of FIGs. 1 to 10 are omitted in the following description except some changes in FIG. 8.

As to the third embodiment, the increment of the rotation angle (Δx, Δy, Δz) is set with the preliminary angle having a relatively greater value such as 5 degrees to 10 degrees. The increment of the rotation angle (Δx, Δy, Δz) can be set with any value by a user. Then, while rotating the 3D model by using the increment of the rotation angle (Δx, Δy, Δz) (step S501), the warping prediction process is performed (step S502) and a gap value of the adhesive force and the warping force (i.e., gap value = adhesive force-warping force) at the current orientation is stored in a memory as gap data (step S502). The gap data is stored in the memory by combining, for example, the set rotation angle and the gap value as one data. If an orientation that does not cause the warping is found (step S503: YES), it is determined that the 3D model fits within the 3D modeling area 45 (step S515: YES), and the orientation of the 3D model is set (steps S513 → S516).

The searching process of the third embodiment of FIG. 12 is similar to the searching process of the first embodiment of FIG. 8 except steps S113 and S102.

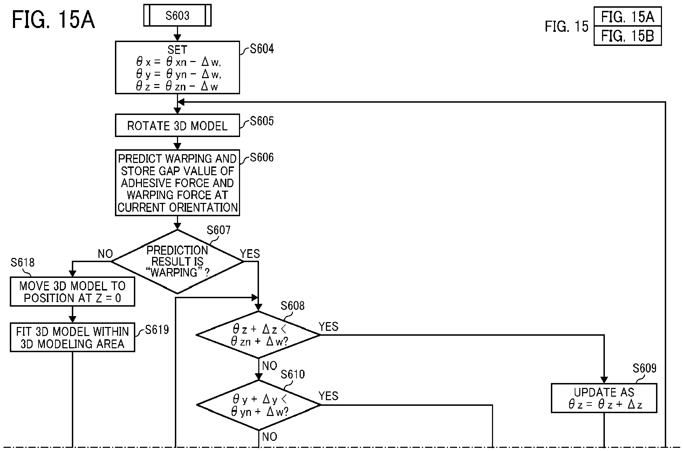

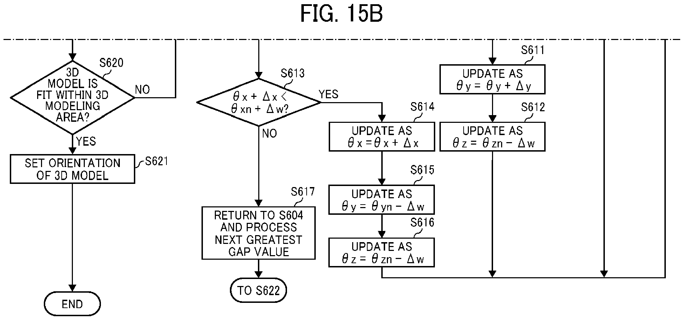

When the 3D model is rotated through 360 degrees for each of the x-axis, y-axis, and z-axis, and the first part of the searching process (FIG. 13) is completed, the sequence proceeds to the second part of the narrowing-down searching process at step S600 (FIG. 14). As to the second part of the narrowing-down searching process (FIG. 14), the increment of the rotation angle (Δx, Δy, Δz) is updated (step S601), and the gap values generated at step S502 by performing the first part of the searching process are sorted from the greatest value (step S602). By comparing the sorted gap values, some of the top values having positive values (e.g., top "N" points from the greatest values) are extracted, and then the process of FIG. 15 is performed (S603).

FIG. 15 is a flowchart illustrating steps of step S603 (FIG. 14), which is performed multiple times as required, for the second part of the narrowing-down searching process. As illustrated in FIG. 15, a range Δw defined by the plus and minus range of the rotation angle at the current orientation is set as a search range (step S604), in which the range Δw can be set by a user as any value, with which the search range is narrowed-down, and the narrowing-down searching process is performed.

As to the search range, the increment of the rotation angle (Δx, Δy, Δz) is set with an angle having higher precision such as less than one degree, which can be set by a user as any value, and the searching process that searches for an orientation that does not cause the warping is performed repeatedly (steps S605 to S621).

When the searching process is performed for the 3D model set with an orientation having a corresponding greatest gap value extracted at step S603, and "an orientation that does not cause the warping is not found," the searching process is performed again for the 3D model by setting the rotation angle having the next greatest gap value (step S617). At step S617, the searching process of FIG. 15 is performed for the rotation angles corresponding to the top "N" points from the greatest values of the gaps that are extracted at step S603 (S622). If an orientation that does not cause the warping is not found (S622: YES), a feedback message is reported out, but the feedback message report can be omitted, and then the narrowing-down searching process and automatic rotation is completed (step S622).

In the searching process of FIG. 15, the sequence from step S604 is performed for each of the rotation angle (θxn, θyn, θzn) of the top "N" points of the gap values, in which "N" is a positive integer of 2 or more (step S603). At step S604, θx = θxn - Δw, θy = θyn - Δw, and θz = θzn - Δw are set.

Then, the 3D model is rotated with an angle corresponding to the rotation angle (θx, θy, θz) (step S605), and the warping prediction is performed (steps S606 and S607). Until an orientation that does not cause the warping is found (S607: NO), the rotation angle (θx, θy, θz) respectively added with the increment of the rotation angle (Δx, Δy, Δz) in the x-axis, y-axis, and z-axis direction, and the rotation angle (θxn, θyn, θzn) of each of the top "N" points of the gap values added with the increment Δw of the rotation angle set by a user are compared (steps S608, S610, S613).

If the rotation angle (θxn, θyn, θzn) of each of top "N" points of the gap values added with the increment Δw of the rotation angle is greater than the rotation angle (θx, θy, θz) respectively added with the increment of the rotation angle (Δx, Δy, Δz), the angle (θx, θy, θz) is respectively added with the increment of the rotation angle (Δx, Δy, Δz) (steps S609, S611, S614), and the 3D model is rotated (step S605) with the angle (θx, θy, θz) respectively reduced the increment of the rotation angle Δw (step S612, S615, S616), and the angle that does not cause the warping is obtained by repeating the process.

If the angle that does not cause the warping is found for the gap value (step S607: NO), the 3D model is moved to contact to the base plate 211 (step S618). Further, when the position of the 3D model is automatically corrected so that the 3D model does not extend beyond the 3D modeling area 45, the process to fit the 3D model within the 3D modeling area 45 is performed (step S619), and it is checked whether the 3D model is fit in the 3D modeling area 45 (step S620).

If the 3D model fits within the 3D modeling area 45 (step S620: YES), the narrowing-down searching process is completed (step S621).

Further, depending on a target speed of the searching process, the process of FIG. 15 can be repeated multiple times, and the number of the processing times for narrowing-down the search range can be increased. As described above, the orientation of the 3D model that does not cause the warping can be searched with enhanced precision by using the increment Δw of the rotation angle set by the user.

FIGs. 8 to 15 are flowcharts illustrating steps in the processes of a computer program. The computer program can be downloaded to the PC 1, and the processes can be performed by executing the computer program.

As to the above-described embodiments, when the 3D modeling is performed for the additive manufacturing such as the fused deposition modeling (FDM) method, the 3D model can be automatically rotated to an orientation that does not cause the warping without requiring a user to operate the 3D model and compute a complex computing. Specifically, the 3D model can be automatically rotated to the orientation that the adhesive force obtained from the base plate 211 becomes greater than the warping force caused by thermal contraction of the filament at the current orientation

The present disclosure can be implemented in any convenient form, for example using dedicated hardware, or a mixture of dedicated hardware and software. The present disclosure may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present disclosure may be practiced otherwise than as specifically described herein. For example, elements and/or features of different examples and illustrative embodiments may be combined each other and/or substituted for each other within the scope of this disclosure and appended claims.

## Claims

1. An information processing apparatus (1) used for an additive manufacturing system (1000), the information processing apparatus (1) comprising a processor (10) configured to:
calculate a contact area of a contact face of a three dimensional (3D) model that contacts a base member of an additive manufacturing apparatus (2);
calculate an adhesive force that is to occur to the contact face of the 3D model and the base member;
rotate the 3D model by changing an angle of the 3D model with respect to a 3D modeling area (45);
calculate a warping force that is to occur to the 3D model when the 3D model is to be formed into a 3D object under each orientation set for the 3D model by rotating the 3D model by changing the angle of the 3D model with respect to the 3D modeling area (45); and
search for a target orientation of the 3D model where the warping force becomes smaller than the adhesive force.

2. The information processing apparatus (1) of claim 1, wherein the processor (10) moves the 3D model to any position in the 3D modeling area (45) to correct a current position of the 3D model so that the 3D model does not extend beyond the 3D modeling area (45).

3. The information processing apparatus (1) of claim 2, wherein the processor (10) searches for a target position of the 3D model that does not extend beyond the 3D modeling area (45) based on a reference position set in the 3D modeling area (45) as a start position for searching the target position of the 3D model.

4. The information processing apparatus (1) of claim 3, further comprising an input device (70) to input reference position information to the information processing apparatus (1).

5. The information processing apparatus (1) of claim 3, wherein the reference position is a pre-set value.

6. The information processing apparatus (1) of claim 1, wherein the processor (10) sets a search range of the 3D model in a space defined by a x-axis, a y-axis, and a z-axis, in which the search range is defined by an angle range set for the x-axis, the search range is defined by an angle range set for the y-axis, and the search range is defined by an angle range set for the z-axis, the angle range set for the x-axis, the angle range set for the y-axis, and the angle range set for the z-axis being settable to the same angle range,
wherein the processor (10) calculates the warping force and the adhesive force obtained for each one of positions of the 3D model set in each of a search ranges defined by the angle range set for the x-axis, a search range defined by the angle range set for the y-axis, and a search range defined by the angle range set for the z-axis,
wherein the processor (10) searches for the target orientation of the 3D model where the warping force becomes smaller than the adhesive force for each of the search range defined by at least one of the angle range set for the x-axis, the angle range set for the y-axis, and the angle range set for the z-axis based on a calculation of the warping force and the adhesive force.

7. The information processing apparatus (1) of claim 6, wherein the processor (10) sets 360 degrees as the angle range for the x-axis, the angle range set the y-axis, and the angle range for the z-axis.

8. The information processing apparatus (1) of claim 1, wherein the processor (10) sets a search range of the 3D model in a space defined by a x-axis, a y-axis, and a z-axis, in which the search range is defined by at least one of an angle range set for the x-axis based on a user instruction, an angle range set for the y-axis based on a user instruction, and an angle range set for the z-axis based on a user instruction,
wherein the processor (10) calculates the warping force and the adhesive force obtained for each one of positions of the 3D model set in each of the search ranges defined by at least one of the angle range set for the x-axis, the angle range set for the y-axis, and the angle range set for the z-axis,
wherein the processor (10) calculates gap values of the calculated warping force and the calculated adhesive force for each one of positions of the 3D model set in each of the search range defined at least one of the angle range set for the x-axis, the angle range set for the y-axis, and the angle range set for the z-axis,
wherein the processor (10) stores a plurality of the gap values of the warping force and the adhesive force in a memory,
wherein the processor (10) selects a plurality of angles corresponding to the plurality of the gap values having relatively greater values,
wherein the processor (10) calculates the warping force and the adhesive force for the selected plurality of angles corresponding to the plurality of the gap values having relatively greater values, and
wherein the processor (10) searches the target orientation of the 3D model where the warping force becomes smaller than the adhesive force based on the calculation of the warping force and the adhesive force.

9. An additive manufacturing system (1000) comprising:
the information processing apparatus (1) of any one of claims 1 to 8; and
an additive manufacturing apparatus (2) to form a three dimensional (3D) object based on data used for controlling an additive manufacturing process received from the information processing apparatus (1).

10. A method of processing information for an additive manufacturing system comprising:
calculating a contact area of a contact face of a three dimensional (3D) model that contacts a base member of an additive manufacturing apparatus (2);
calculating an adhesive force that is to occur to the contact face of the 3D model and the base member;
rotating the 3D model by changing an angle of the 3D model with respect to a 3D modeling area (45);
calculating a warping force that is to occur to the 3D model when the 3D model is to be formed into a 3D object under each orientation set for the 3D model by rotating the 3D model by changing the angle of the 3D model with respect to the 3D modeling area (45); and
searching for a target orientation of the 3D model where the warping force becomes smaller than the adhesive force.

11. A carrier medium carrying computer readable code that, when executed by a computer, causes the computer to execute the method of claim 10.
